# FASCICULE DE BREVET EUROPEEN

(11) **EP 3 293 035 B1**
(45) Date de publication et mention de la délivrance du brevet: **15.05.2019**
(21) Numéro de dépôt: 17187571.9
(22) Date de dépôt: 23.08.2017
(51) Int. Cl.: B60L 5/00, B60L 7/02, H02P 3/22

(54) **DISPOSITIF DE FREINAGE DYNAMIQUE À DISSIPATION DE CHALEUR OPTIMISÉE, POUR UN VÉHICULE FERROVIAIRE**
DYNAMISCHE BREMSVORRICHTUNG MIT OPTIMIERTER WÄRMEABLEITUNG FÜR SCHIENENFAHRZEUG
AN OPTIMIZED DYNAMIC BRAKING SYSTEM FOR DISSIPATING HEAT, FOR A RAILWAY VEHICLE

(30) Priorité: 09.09.2016 FR 1658430
(43) Date de publication de la demande: 14.03.2018
(73) Titulaire: ALSTOM Transport Technologies, 93400 Saint-Ouen (FR)
(72) Inventeur: DO, Huu-Thi, 17300 Rochefort (FR)
(74) Mandataire: Lavoix

(56) Documents cités:
- EP-A2- 2 033 834
- Backer-Facsa S.L.: "Railway Resistors For on-board and substation installations", , 18 mai 2016 (2016-05-18), pages 1-8, XP055370360, Llanera, Asturias (Spain) Extrait de l'Internet: URL:http://www.europowercomponents.com/med ia/uploads/facsa Railway Resistors 18052016.pdf [extrait le 2017-05-08]
- Gino Ag: "High power resistors for transportation systems", , août 2014 (2014-08), pages 1-6, XP055370365, Bonn, Germany Extrait de l'Internet: URL:http://www.gino.de/wp-content/uploads/ GINO_traction_resistors.pdf [extrait le 2017-05-08]
- MYUNG-JIN CHUNG ET AL: "Design of Roof Type Dynamic Braking Resistor for Railway Carriage by using Thermal Analysis", ADVANCED SCIENCE AND TECHNOLOGY LETTERS, 15 avril 2014 (2014-04-15), pages 379-382, XP055370362, ISSN: 2287-1233, DOI: 10.14257/astl.2014.47.86

## Description

La présente invention concerne un dispositif de freinage dynamique pour un véhicule ferroviaire.

Un dispositif de freinage dynamique est destiné à utiliser la motorisation d'un véhicule en génératrice afin de réduire sa vitesse. L'énergie capturée est alors par exemple dissipée sous forme de chaleur, au moyen d'au moins un rhéostat. Cette technologie est divulguée dans la demande de brevet EP2033834 A2 (Alstom Transport SA).

Dans certains véhicules ferroviaires, le rhéostat est agencé en toiture. Pour des raisons de gain en encombrement, ce rhéostat est dans certains cas agencé en dessous d'un équipement, par exemple d'un pantographe. Un exemple d'un arrangement similaire est divulgué dans la publication BACKER-FACSA S.L. "Railway Resistors for on-board and substation installations", pages1-8, publié en Llanera, Asturias, Espagne, et extrait de le Internet www.europowercomponents.com/media/uploads/ facsa_Railway_Resistors_18052016.pdf.

Il en résulte que cet équipement se trouve alors dans une zone de forte chaleur, ce qui peut nuire à son fonctionnement, à sa fiabilité et/ou à sa durée de vie.

L'invention a notamment pour but de remédier à cet inconvénient, en proposant un dispositif de freinage dynamique ne nuisant pas aux équipements en toiture du véhicule ferroviaire.

A cet effet, l'invention a notamment pour objet un dispositif de freinage dynamique pour un véhicule ferroviaire comprenant une toiture munie d'au moins un équipement, le dispositif de freinage dynamique comprenant au moins un rhéostat destiné à être agencé en toiture de ce véhicule ferroviaire et en dessous dudit équipement, caractérisé en ce qu'il comporte un déflecteur thermique recouvrant le rhéostat, comportant des ouvertures latérales de part et d'autre du rhéostat dans une direction transversale, et un panneau de déflexion agencé au-dessus du rhéostat, et destiné à être agencé en dessous dudit équipement, le panneau de déflexion étant formé pour présenter, dans la direction transversale, une largeur supérieure à une largeur connue dudit équipement dans cette même direction transversale.

Le déflecteur thermique évacue l'air chaud latéralement, de part et d'autre de l'équipement qui se situe au-dessus du panneau de déflexion, si bien que cet équipement ne se trouve pas dans un flux d'air chaud.

L'invention permet donc un agencement compact du rhéostat et de l'équipement (généralement un pantographe), sans nuire à cet équipement.

Un dispositif de freinage dynamique selon l'invention comporte en outre l'une ou plusieurs des caractéristiques techniques suivantes, prises seules ou selon toutes combinaisons techniquement envisageables.- Le déflecteur thermique comporte des parois avant et arrière perpendiculaires à une direction longitudinale perpendiculaire à la direction transversale.
- Le panneau de déflection s'étend au-delà des parois avant et arrière dans la direction transversale.
- Le panneau de déflection est formé par deux pans latéraux inclinés, de sorte que ce panneau de déflection présente une forme de V, dont le sommet s'étend dans une direction longitudinale perpendiculaire à la direction transversale.
- Les pans latéraux s'étendent au-dessus d'un plan horizontal passant par le sommet.
- Chaque pan latéral forme avec le plan horizontal un angle compris entre 0° et 15°, plus particulièrement entre 2° et 5°.
- Ledit équipement est un pantographe.

L'invention concerne également un véhicule ferroviaire, comportant une toiture munie d'un équipement, caractérisé en ce qu'il comporte un dispositif de freinage dynamique tel que défini précédemment, dans lequel le rhéostat est agencé en dessous dudit équipement.

L'invention concerne enfin un déflecteur thermique pour un dispositif de freinage dynamique tel que défini précédemment, destiné à recouvrir le rhéostat du dispositif de freinage dynamique, et comportant des ouvertures latérales de part et d'autre du rhéostat dans une direction transversale, et un panneau de déflexion destiné à être agencé au-dessus du rhéostat, et destiné à être agencé en dessous d'un équipement du véhicule ferroviaire, le panneau de déflexion étant formé pour présenter, dans la direction transversale, une largeur supérieure à une largeur connue dudit équipement dans cette même direction transversale.

L'invention sera mieux comprise à la lecture de la description qui va suivre, donnée uniquement à titre d'exemple et faite en se référant aux figures annexées, parmi lesquelles :
- La figure 1 est une vue en perspective d'une toiture de véhicule ferroviaire comportant un dispositif de freinage dynamique selon un exemple de mode de réalisation de l'invention ;
- La figure 2 est une vue en perspective d'un déflecteur thermique équipant le dispositif de freinage dynamique de la figure 1.

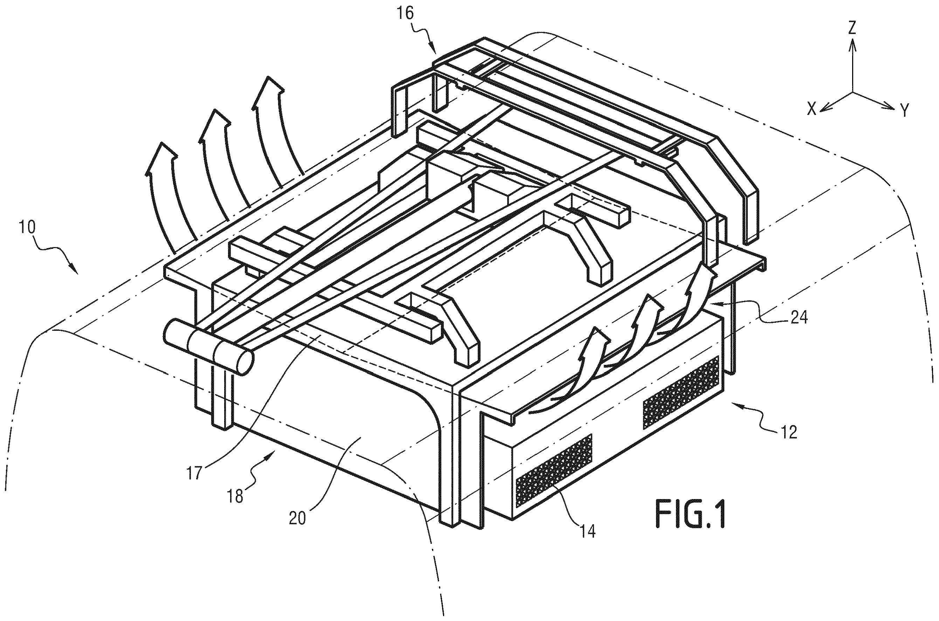

On a représenté sur la figure 1, une toiture 10 d'un véhicule ferroviaire. Ce véhicule ferroviaire comporte un dispositif de freinage dynamique, désigné par la référence générale 12.

Le dispositif de freinage dynamique 12 comporte de manière classique un rhéostat 14 destiné à évacuer sous forme de chaleur de l'énergie récupérée par freinage dynamique. Il est à noter que le dispositif de freinage dynamique 12 comporte également de manière classique tous les éléments nécessaires à son fonctionnement. Ces éléments ne seront pas décrits dans le détail.

Le rhéostat 14 est agencé en toiture 10 du véhicule ferroviaire, en dessous d'un équipement 16 dans une direction verticale Z. Dans l'exemple décrit, l'équipement 16 est un pantographe. Le pantographe 16 est porté par un support 17, par exemple formé par un siège porté par quatre pieds. Le support 17 permet de supporter le pantographe 16 au-dessus du rhéostat 14.

Afin que la chaleur évacuée par le rhéostat 14 ne nuise pas à l'équipement 16, le dispositif de freinage dynamique 12 comporte un déflecteur thermique 18 recouvrant le rhéostat 14. Plus particulièrement, le déflecteur thermique 18 est agencé entre le rhéostat 14 et le support 17.

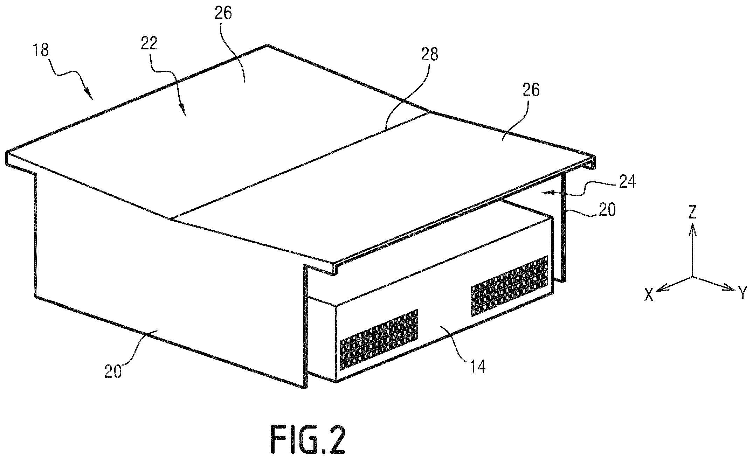

Le déflecteur thermique 18, représenté plus en détail sur la figure 2, comporte des parois avant et arrière 20 perpendiculaires à une direction longitudinale X (perpendiculaire à la direction verticale Z), et un panneau de déflexion supérieur 22, formant ensemble un logement pour le rhéostat 14. Les parois 20 sont donc agencées de part et d'autre du rhéostat 14 dans la direction longitudinale X, et le panneau de déflexion 22 est agencé au-dessus du rhéostat 14 dans la direction verticale Z. Il est à noter que le panneau de déflexion 22 est agencé sous le support 17, donc sous l'équipement 16.

Par ailleurs, le déflecteur thermique 18 comporte des ouvertures latérales 24 de part et d'autre du rhéostat 14 dans une direction transversale Y perpendiculaire à la direction longitudinale X et à la direction verticale Z. Dans l'exemple décrit, le déflecteur thermique 18 est dépourvu de parois latérales, si bien qu'il est constitué des parois 20 et du panneau de déflexion 22.

Le panneau de déflexion 22 est formé pour présenter, dans la direction transversale Y, une largeur supérieure à une largeur dudit équipement 16 dans cette même direction transversale Y. En d'autres termes, le panneau de déflexion 22 s'étend latéralement au-delà de l'équipement 16. On notera que l'équipement 16 destiné à surmonter le panneau de déflexion 22 est connu lors de l'élaboration du panneau de déflexion 22. Les dimensions du panneau de déflexion 22 seront donc choisies en fonction de cet équipement 16 prédéfini. Par exemple, lorsque l'équipement 16 est un pantographe, on connait la taille des archers de ce pantographe, et la largeur du panneau de déflexion 22 est choisie en fonction de cette taille connue.

Plus particulièrement, dans l'exemple décrit, et comme cela est notamment visible sur la figure 2, le panneau de déflexion 22 s'étend au-delà des parois avant et arrière 20 dans la direction transversale Y.

Avantageusement, le panneau de déflection 22 est formé par deux pans latéraux inclinés 26, de sorte que ce panneau de déflection 22 présente une forme de V, dont le sommet 28 s'étend dans la direction longitudinale X.

De préférence, les pans latéraux 26 s'étendent au-dessus d'un plan horizontal passant par le sommet 28. En d'autres termes, les pans latéraux 26 sont inclinés vers le haut depuis le sommet 28, et convergent l'un vers l'autre vers le bas.

Avantageusement, chaque pan latéral 26 forme, avec ledit plan horizontal, un angle compris entre 0° et 15°, plus particulièrement entre 2° et 5°. En effet, un tel angle forme un compromis optimal entre une bonne déflexion de la chaleur et un encombrement réduit dans la direction verticale Z.

Il apparait clairement que le déflecteur thermique 18 permet de dévier la chaleur évacuée par le rhéostat 14 de part et d'autre de l'équipement 16, de sorte que cet équipement 16 ne se trouve pas dans le flux de chaleur évacuée.

En particulier, puisque le panneau de déflexion 22 est plus large que l'équipement 16, et agencé entre le rhéostat 14 et cet équipement 16, il empêche la chaleur de remonter vers l'équipement 16, étant dévié sur le côté.

L'inclinaison des pans 26 vers le haut permet d'optimiser l'écoulement du flux de chaleur, de manière à éviter un écoulement chaotique qui impliquerait un risque de retour de la chaleur vers l'équipement 16. Comme indiqué ci-dessus, un angle compris entre 2 et 5° permet un bon écoulement du flux, tout en conservant un encombrement vertical réduit pour le panneau de déflexion 22.

On notera par ailleurs que le déflecteur thermique 18 ne comporte des ouvertures 24 que latéralement, le logement dans lequel est logé le rhéostat 14 étant obstrué vers l'avant et l'arrière par les parois 20. On assure ainsi que le flux de chaleur soit dévié sur le côté uniquement, pour une protection maximale de l'équipement 16.

On notera que l'invention n'est pas limitée au mode de réalisation précédemment décrit, mais pourrait présenter diverses variantes complémentaires.

## Revendications

1. Dispositif (12) de freinage dynamique pour un véhicule ferroviaire comprenant une toiture (10) munie d'au moins un équipement (16), le dispositif de freinage dynamique (12) comprenant au moins un rhéostat (14) destiné à être agencé en toiture (10) de ce véhicule ferroviaire et en dessous dudit équipement (16), **caractérisé en ce qu'**il comporte un déflecteur thermique (18) recouvrant le rhéostat (14), comportant des ouvertures latérales (24) de part et d'autre du rhéostat (14) dans une direction transversale (Y), et un panneau de déflexion (22) agencé au-dessus du rhéostat (14), et destiné à être agencé en dessous dudit équipement (16), le panneau de déflexion (22) étant formé pour présenter, dans la direction transversale (Y), une largeur supérieure à une largeur connue dudit équipement (16) dans cette même direction transversale (Y).

2. Dispositif de freinage dynamique (12) selon la revendication 1, dans lequel le déflecteur thermique (18) comporte des parois avant et arrière (20) perpendiculaires à une direction longitudinale (X) perpendiculaire à la direction transversale (Y).

3. Dispositif de freinage dynamique (12) selon la revendication 2, dans lequel le panneau de déflection (22) s'étend au-delà des parois avant et arrière (20) dans la direction transversale (Y).

4. Dispositif de freinage dynamique (12) selon l'une quelconque des revendications précédentes, dans lequel le panneau de déflection (22) est formé par deux pans latéraux (26) inclinés, de sorte que ce panneau de déflection (22) présente une forme de V, dont le sommet (28) s'étend dans une direction longitudinale (X) perpendiculaire à la direction transversale (Y).

5. Dispositif de freinage dynamique (12) selon la revendication 4, dans lequel les pans latéraux (26) s'étendent au-dessus d'un plan horizontal passant par le sommet (28).

6. Dispositif de freinage dynamique (12) selon la revendication 5, dans lequel chaque pan latéral (26) forme avec le plan horizontal un angle compris entre 0° et 15°, plus particulièrement entre 2° et 5°.

7. Dispositif de freinage dynamique (12) selon l'une quelconque des revendications précédentes, dans lequel ledit équipement (16) est un pantographe.

8. Véhicule ferroviaire, comportant une toiture (10) munie d'un équipement (16), **caractérisé en ce qu'**il comporte un dispositif de freinage dynamique (12) selon l'une quelconque des revendications 1 à 6, dans lequel le rhéostat (14) est agencé en dessous dudit équipement (16).

9. Déflecteur thermique (22) pour un dispositif de freinage dynamique (12) de véhicule ferroviaire selon l'une quelconque des revendications 1 à 6, destiné à recouvrir le rhéostat (14) du dispositif de freinage dynamique (12), et comportant des ouvertures latérales (24) de part et d'autre du rhéostat (14) dans une direction transversale (Y), et un panneau de déflexion (22) destiné à être agencé au-dessus du rhéostat (14), et destiné à être agencé en dessous d'un équipement (16) du véhicule ferroviaire, le panneau de déflexion (22) étant formé pour présenter, dans la direction transversale (Y), une largeur supérieure à une largeur connue dudit équipement (16) dans cette même direction transversale (Y).

## Patentansprüche

1. Dynamische Bremsvorrichtung (12) für ein Schienenfahrzeug, das ein Dach (10) aufweist, das mit wenigstens einer Ausrüstung (16) versehen ist, wobei die dynamische Bremsvorrichtung (12) aufweist wenigstens einen Rheostat (14), der dazu bestimmt ist, am Dach (10) dieses Schienenfahrzeugs unterhalb der besagten Ausrüstung (16) angeordnet zu sein, **dadurch gekennzeichnet, dass** sie aufweist einen thermischen Ableiter (18), der den Rheostat (14) abdeckt und der in einer Querrichtung (Y) beidseitig des Rheostat (14) seitliche Öffnungen (24) aufweist, und ein Ablenkpaneel (22), das oberhalb des Rheostat (14) angeordnet ist und das dazu bestimmt ist, unterhalb der besagten Ausrüstung (16) angeordnet zu sein, wobei das Ablenkpaneel (22) gebildet ist, um in der Querrichtung (Y) eine Breite zu haben, die größer ist als eine bekannte Breite der besagten Ausrüstung (16) in dieser gleichen Querrichtung (Y).

2. Dynamische Bremsvorrichtung (12) gemäß Anspruch 1, wobei der thermische Ableiter (18) eine vordere und eine hintere Wand (20) aufweist, die zu einer Längsrichtung (X) senkrecht sind, die zu der Querrichtung (Y) senkrecht ist.

3. Dynamische Bremsvorrichtung (12) gemäß Anspruch 2, wobei sich das Ablenkpaneel (22) in der Querrichtung (Y) über die vordere und die hintere Wand (20) hinaus erstreckt.

4. Dynamische Bremsvorrichtung (12) gemäß irgendeinem der vorhergehenden Ansprüche, wobei das Ablenkpaneel (22) von zwei geneigten Seitenteilen (26) gebildet ist, sodass dieses Ablenkpaneel (22) eine V-Form hat, deren Wurzel (28) sich in einer Längsrichtung (X) erstreckt, die senkrecht zu der Querrichtung (Y) ist.

5. Dynamische Bremsvorrichtung (12) gemäß Anspruch 4, wobei die Seitenteile (26) sich oberhalb einer horizontalen Ebene erstrecken, in der die Wurzel (28) verläuft.

6. Dynamische Bremsvorrichtung (12) gemäß Anspruch 5, wobei jeder Seitenteil (26) mit der horizontalen Ebene einen Winkel bildet, der zwischen 0° und 15°, insbesondere zwischen 2° und 5°, liegt.

7. Dynamische Bremsvorrichtung (12) gemäß irgendeinem der vorhergehenden Ansprüche, wobei die besagte Ausrüstung (16) ein Stromabnehmer ist.

8. Schienenfahrzeug mit einem Dach (10), das mit einer Ausrüstung (16) versehen ist, **dadurch gekennzeichnet, dass** es eine dynamische Bremsvorrichtung (12) gemäß irgendeinem der Ansprüche 1 bis 6 aufweist, wobei der Rheostat (14) unterhalb der besagten Ausrüstung (16) angeordnet ist.

9. Thermischer Ableiter (22) für eine dynamische Bremsvorrichtung (12) eines Schienenfahrzeugs gemäß irgendeinem der Ansprüche 1 bis 6, der dazu bestimmt ist, den Rheostat (14) der dynamischen Bremsvorrichtung (12) abzudecken, und der aufweist in einer Querrichtung (Y) beidseitig des Rheostat (14) seitliche Öffnungen (24) und ein Ablenkpaneel (22), das dazu bestimmt ist, oberhalb des Rheostat (14) angeordnet zu sein, und das dazu bestimmt ist, unterhalb einer Ausrüstung (16) des Schienenfahrzeugs angeordnet zu sein, wobei das Ablenkpaneel (22) gebildet ist, um in der Querrichtung (Y) eine Breite zu haben, die größer ist als eine bekannte Breite der besagten Ausrüstung (16) in dieser gleichen Querrichtung (Y).

## Claims

1. Dynamic braking device (12) for a railway vehicle having a roof (10) provided with at least one piece of equipment (16), the dynamic braking device (12) comprising at least one rheostat (14) which is to be arranged on the roof (10) of the railway vehicle and beneath said piece of equipment (16), **characterised in that** it comprises a heat deflector (18) covering the rheostat (14), having lateral openings (24) on either side of the rheostat (14) in a transverse direction (Y), and a deflection panel (22) which is arranged above the rheostat (14) and is to be arranged beneath said piece of equipment (16), the deflection panel (22) being formed to have, in the transverse direction (Y), a width greater than a known width of said piece of equipment (16) in the same transverse direction (Y).

2. Dynamic braking device (12) according to claim 1, wherein the heat deflector (18) has front and rear walls (20) perpendicular to a longitudinal direction (X) perpendicular to the transverse direction (Y).

3. Dynamic braking device (12) according to claim 2, wherein the deflection panel (22) extends beyond the front and rear walls (20) in the transverse direction (Y).

4. Dynamic braking device (12) according to any one of the preceding claims, wherein the deflection panel (22) is formed by two sloping lateral leaves (26), so that the deflection panel (22) has a V shape, the vertex (28) of which extends in a longitudinal direction (X) perpendicular to the transverse direction (Y).

5. Dynamic braking device (12) according to claim 4, wherein the lateral leaves (26) extend above a horizontal plane passing through the vertex (28).

6. Dynamic braking device (12) according to claim 5, wherein each lateral leaf (26) forms with the horizontal plane an angle of between 0° and 15°, more particularly between 2° and 5°.

7. Dynamic braking device (12) according to any one of the preceding claims, wherein said piece of equipment (16) is a pantograph.

8. Railway vehicle, having a roof (10) provided with a piece of equipment (16), **characterised in that** it comprises a dynamic braking device (12) according to any one of claims 1 to 6, wherein the rheostat (14) is arranged beneath said piece of equipment (16).

9. Heat deflector (22) for a dynamic braking device (12) for a railway vehicle according to any one of claims 1 to 6, for covering the rheostat (14) of the dynamic braking device (12), and having lateral openings (24) on either side of the rheostat (14) in a transverse direction (Y), and a deflection panel (22) which is to be arranged above the rheostat (14) and is to be arranged beneath a piece of equipment (16) of the railway vehicle, the deflection panel (22) being formed to have, in the transverse direction (Y), a width greater than a known width of said piece of equipment (16) in the same transverse direction (Y).
